# EUROPÄISCHE PATENTSCHRIFT

(11) **EP 2 396 193 B1**
(45) Veröffentlichungstag und Bekanntmachung des Hinweises auf die Patenterteilung: **08.04.2015**
(21) Anmeldenummer: 10705799.4
(22) Anmeldetag: 11.02.2010
(51) Int. Cl.: B60N 2/44, B60N 2/56

(54) **FAHRZEUGSITZ MIT EINEM POLSTER EINES SITZKISSENS UND/ODER EINER SITZLEHNE UND MIT EINER MASSAGEEINRICHTUNG**
VEHICLE SEAT WITH AN UPHOLSTERY OF THE CUSHION AND/OR OF THE BACKREST AND WITH A MASSAGE DEVICE
SIÈGE DE VÉHICULE AVEC CAPITONNAGE POUR ASSISE OU/ET POUR DOSSIER ET AVEC UN DISPOSITIF DE MASSAGE

(30) Priorität: 11.02.2009 DE 102009008421; 01.07.2009 DE 102009031333; 31.07.2009 DE 102009035566
(43) Veröffentlichungstag der Anmeldung: 21.12.2011
(73) Patentinhaber: Daimler AG, 70327 Stuttgart (DE)
(72) Erfinder: FRIDERICH, Sven, 71034 Böblingen (DE); HAUSER, Gerhard, 72127 Kusterdingen (DE); SCHIELE, Werner, 71732 Tamm (DE); WEISER, Gudrun, 71157 Hildrizhausen (DE); WÖRNER, Ulrich, 71263 Weil der Stadt (DE)
(74) Vertreter: JENSEN & SON
(86) Internationale Anmeldenummer: PCT/EP2010/000847
(87) Internationale Veröffentlichungsnummer: WO 2010/091864

(56) Entgegenhaltungen:
- EP-A1- 1 987 853
- WO-A1-2004/026623
- US-A- 6 087 942
- US-B1- 7 334 839

## Beschreibung

Die Erfindung betrifft einen Fahrzeugsitz mit einem Polster eines Sitzkissens und/oder einer Sitzlehne und mit einer Massageeinrichtung der im Oberbegriff des Patentanspruchs 1 angegebenen Art.

Ein solcher Fahrzeugsitz ist beispielsweise aus der Mercedes-Benz S-Klasse (Baureihe W221) bekannt. Dabei sind sieben Massagekammern und vier Programme vorgesehen, welche mit einer rollenden Bewegung für eine Stimulation der Rückenmuskulatur sorgen.

Aus der DE 10242760 A1 ist ein weiterer Fahrzeugsitz bekannt, bei welchem kissenartige Elemente vorgesehen sind, die einzeln über eine Steuerungseinrichtung mit Druck beaufschlagbar sind. Auf diese Weise ist einerseits eine statische Sitzkontur definiert bzw. einstellbar und andererseits sind durch Beaufschlagung von Elementen verschiedene Massagefunktionen realisierbar.

Aus dem Dokument US 6 087 942 A ist ein Fahrzeugsitz bekannt, in welchen einerseits eine Vielzahl von Aktoren als Massageelemente sowie andererseits eine Sitzheizung integriert sind. Die Massageelemente sind als DC-Motoren bzw. als Vibratoren ausgebildet, welche um eine horizontale Achse drehbar sind. Es können auch unterschiedliche Massagezonen vorgesehen sein, nämlich beispielsweise zwei solche Zonen an einem Sitzkissenteil sowie zwei Zonen an einem Rückenlehnenteil.

Ein Fahrzeugsitz ist außerdem aus dem Dokument US 7 334 839 B1 als bekannt zu entnehmen. Dieser Fahrzeugsitz beinhaltet neben einer Massageeinrichtung zusätzlich auch eine Heizung, welche als herkömmliche Sitzheizung ausgebildet ist.

Fahrzeugsitze sind außerdem aus den Druckschriften WO 2004/026623 A1 sowie EP 1 987 853 A1 bekannt.

Aufgabe der vorliegenden Erfindung ist es, einen Fahrzeugsitz der eingangs genannten Art weiter zu entwickeln, mit welchem sich eine größere Entspannungswirkung bzw. ein wohltuender Effekt erreichen lassen.

Die Aufgabe wird erfindungsgemäß durch einen Fahrzeugsitz mit den Merkmalen des Anspruchs 1 gelöst. Vorteilhafte Ausgestaltungen mit zweckmäßigen und nicht-trivialen Weiterbildungen der Erfindung sind in den abhängigen Patentansprüchen angegeben. Zur Lösung der erfindungsgemäßen Aufgabe wird ein Fahrzeugsitz mit den Merkmalen des Anspruchs 1 vorgeschlagen.

Die Verbindung der Massageeinrichtung mit der Sitzklimatisierung bringt für den Insassen eine größere Entspannungswirkung, denn die Wärme- oder Kälteeinwirkung unterstützt den Massageeffekt und intensiviert dadurch das Wohlempfinden des Insassen.

In einer zweckmäßigen Weiterbildung sind mittels der Steuerungseinrichtung wenigstens zwei Sitzheizungszonen einer Sitzheizung steuerbar. Dadurch ist es für den Insassen jederzeit möglich, über die Steuereinrichtung zu entscheiden, welche Sitzheizungszone bzw. Sitzheizungszonen der mindestens zwei Zonen der Sitzheizung eingeschaltet werden sollen.

In weiterer Ausgestaltung der Erfindung hat es sich darüber hinaus als vorteilhaft gezeigt, wenn mittels der Steuerungseinrichtung die einzelnen druckbeaufschlagbaren Elemente in unterschiedlichen Abfolgen bzw. Massageprogrammen steuerbar sind. Dadurch kann beispielsweise auf einfache und wirkungsvolle Weise durch periodischen Wechsel oder kombiniertes Betätigen einzelner druckbeaufschlagbaren Elemente, eine konkrete Massagefunktion - zum Beispiel in einem Rückenbereich oder im Schulterbereich - realisiert werden.

Erfindungsgemäss sind die einzelnen druckbeaufschlagbaren Elemente als Zellen einer Massagematte ausgebildet, durch welche im Wesentlichen punktuelle Veränderungen der Sitzkontur erreichbar sind. Wenn die einzelnen Elemente bzw. Zellen in einer Massagematte integriert sind, wird einerseits die Montage der Massageeinrichtung innerhalb des Polsters des Fahrzeugsitzes erleichtert. Andererseits ist dadurch auch die Position der einzelnen Elemente präzise festgelegt, so dass insbesondere auch während der Massagen ein Verrutschen oder ein Verschieben vermieden wird.

Durch die punktuellen Veränderungen der Sitzkontur beim Beaufschlagen der einzelnen Elemente wird erreicht, dass durch Betätigen eines einzigen Elementes nur ein relativ kleiner Bereich des Polsters bewegt bzw. der Sitzkontur beeinflusst wird. Die punktförmige Druckbeaufschlagung hat den Vorteil, dass die Vielfältigkeit der durch den Sitz realisierbaren Massagefunktionen erhöht wird.

Dabei hat es sich in weiterer Ausgestaltung der Erfindung als besonders vorteilhaft gezeigt, wenn die Massagematte mindestens 18 Elemente bzw. Zellen für mindestens 14 Massagezonen umfasst. Durch Aufteilen des Polsters in mindestens 14 Zonen für mindestens 18 Elemente, wobei in jeder Zone jeweils mindestens ein Element vorgesehen ist, können beispielsweise bestimmte Rückenzonen ganz gezielt massiert werden.

In weiterer Ausgestaltung der Erfindung hat es sich als zudem vorteilhaft gezeigt, wenn in der Steuerung mindestens vier voreingestellte oder individuell einstellbare Massageprogramme vorgesehen sind. Insbesondere ist hierdurch eine Implementierung von persönlich bevorzugten Massagenabfolgen oder bekannten Massagearten realisierbar, wie zum Beispiel einer Reflexzonenmassage mit gezielter Massage einzelner Bereiche des Körpers.

Des Weiteren hat es sich als vorteilhaft gezeigt, wenn die Elemente pneumatisch oder elektropneumatisch mit Druck beaufschlagbar sind. Dadurch können einzelne Elemente auf einfache Weise betätigt werden. Dabei ist die Verwendung von Luft gegenüber einem Fluid hinsichtlich von möglichen Leckageproblemen vorteilhaft.

Schließlich hat es sich als vorteilhaft gezeigt, wenn die Sitzheizung als eine Carbon- oder eine Litzenheizung ausgebildet ist. Somit werden sehr flexible Sitzheizungen verwendet, die sich an Veränderung der Sitzkontur während der Massage anpassen. Insbesondere sind Carbonheizungen sehr wiederstandsfähig gegen mechanische Beanspruchungen wie zum Beispiel Biege-, Wechsel- oder Zugbelastungen.

Die druckbeaufschlagbaren Elemente sind als Massageelemente zum Massieren eines Fahrzeuginsassen ausgebildet und wenigstens ein Funktionselement ist vorgesehen, welches eine Heizeinrichtung und eine Kühleinrichtung umfasst. Hierbei ist das Funktionselement wahlweise als Heiz- oder als Kühleinrichtung betreibbar. Dadurch brauchen zum Kühlen oder Heizen nicht zwei voneinander separate Einrichtungen vorgesehen zu werden, sondern ein und dieselbe Heiz- und Kühleinrichtung kann wahlweise zum Heizen oder zum Kühlen herangezogen werden. Dies vereinfacht den technischen Installationsaufwand des Funktionselements, wodurch der Fahrzeugsitz auf vereinfachte Weise ein Kühlen oder Heizen ermöglicht.

Durch das Zusammenspiel von Wärme oder, insbesondere kurzzeitig wirkender, Kälte mit dem durch das Massageelement bereitgestellten Druck ist eine besonders wohltuende, entspannende Wirkung für den Fahrzeuginsassen erreichbar. Analog zu einer Heißsteinbehandlung (Hot Stone Therapie) oder Kaltsteinbehandlung (Cold Stone Therapie) kann das Eindringen von Wärme in tiefere Körperzonen des Fahrzeuginsassen zu einem Zustand tiefer Entspannung und eines gesteigerten Wohlbefindens führen. Das lokale Abkühlen des Körpers des Fahrzeuginsassen unterstützt auf angenehme Weise die Durchblutung und den Lymphfluss. Typische Wärmeanwendungsgebiete können hierbei Rückenschmerzen und/oder Muskel- und Gelenkschmerzen sein. Typische Kälteanwendungen können bei Kopfschmerzen, Verstauchungen und/oder Muskelbelastungen mit entzündlichem Geschehen vorliegen. Ein Wechsel von kalt und warm kann, insbesondere chronischen, Verhärtungen und/oder Verspannungen entgegenwirken.

Besonders einfach kann das Umschalten des wenigstens einen Funktionselements von dem Heizbetrieb in den Kühlbetrieb und umgekehrt erfolgen, wenn das wenigstens eine Funktionselement als Peltierelement ausgebildet ist. Ein solches Peltierelement weist infolge eines Anlegens einer elektrischen Spannung eine warme Seite und eine kalte Seite auf. Durch Umkehr der Stromrichtung kann die bisher warme Seite als dann kalte Seite und die bisher kalte Seite als dann warme Seite eingesetzt werden. Das Umschalten zwischen Kühlen und Heizen kann so besonders rasch erfolgen.

Das Funktionselement ist in einem mittels des wenigstens einen Massageelements mit Druck beaufschlagbaren Bereich des Fahrzeugsitzes angeordnet. Es kann so nicht nur lokal Wärme oder Kälte bereitgestellt werden, sondern das Bereitstellen von Kälte oder Wärme kann lokal mit dem durch das Massageelement bereitgestellten Druck gekoppelt und so wahlweise ein kalter oder warmer Druckpunkt bereitgestellt werden. Auch eine zeitliche Kopplung von Druck und Wärme bzw. Druck und Kälte oder Druck mit abwechselnder Wärme und Kälte kann vorgesehen sein. Insbesondere kann ansteigender oder abfallender Druck mit ansteigender oder abfallender Wärme oder wahlweise Kälte einhergehen. Auch kann das Ansteigen und Abfallen der thermischen Wirkung und des Drucks, zumindest zeitweise, gegenläufig erfolgen.

Dadurch, dass durch das wahlweise als die Heizeinrichtung oder als die Kühleinrichtung betreibbare Funktionselement lokal Wärme oder Kälte bereitgestellt werden kann, muss nicht der gesamte Fahrzeugsitz beheizt oder gekühlt werden, wodurch eine hohe Energieeffizienz erreichbar ist. Insbesondere kann hierbei die Wärme oder Kühle lediglich im Bereich der Massageelemente bereitgestellt werden.

Die im rückwärtigen Teilbereich des Sitzspiegels angeordneten Massageelemente sind dazu ausgelegt, Sitzbeinhöcker, also die unteren, verdickten Bereiche des Sitzbeins eines Fahrzeuginsassen, mit Druck zu beaufschlagen. Werden also die Massageelemente mit einem pneumatischen oder hydraulischen Medium befüllt, so werden die Sitzbeinhöcker angehoben
Demgegenüber sind die im unteren Teilbereich des Lehnenspiegels angeordneten Massageelemente dazu ausgebildet, die zwei Darmbeine des Beckens des Fahrzeuginsassen mit einem nach vorne gerichteten Druck zu beaufschlagen.

Weitere Vorteile, Merkmale und Einzelheiten der Erfindung ergeben sich aus der nachfolgenden Beschreibung eines bevorzugten Ausführungsbeispiels sowie anhand der Zeichnungen. Dabei zeigen:
- Fig. 1: eine Frontansicht eines Fahrzeugsitzes, der eine Massageeinrichtung und eine Sitzheizung umfasst, mit einem Polster einer Sitzlehne, wobei auf dem Polster der Sitzlehne 14 Massagezonen der Massageeinrichtung und zwei Sitzheizungszonen der Sitzheizung dargestellt sind,
- Fig. 2: eine Frontansicht einer Massagematte der Massageneinrichtung, in welcher 18 druckbeaufschlagbare Elemente als einzelne Zellen der Massagematte ausgebildet sind und
- Fig. 3: zeigt in einer schematischen Schnittansicht einen Teilbereich des Fahrzeugsitzes mit einem Massageelement.

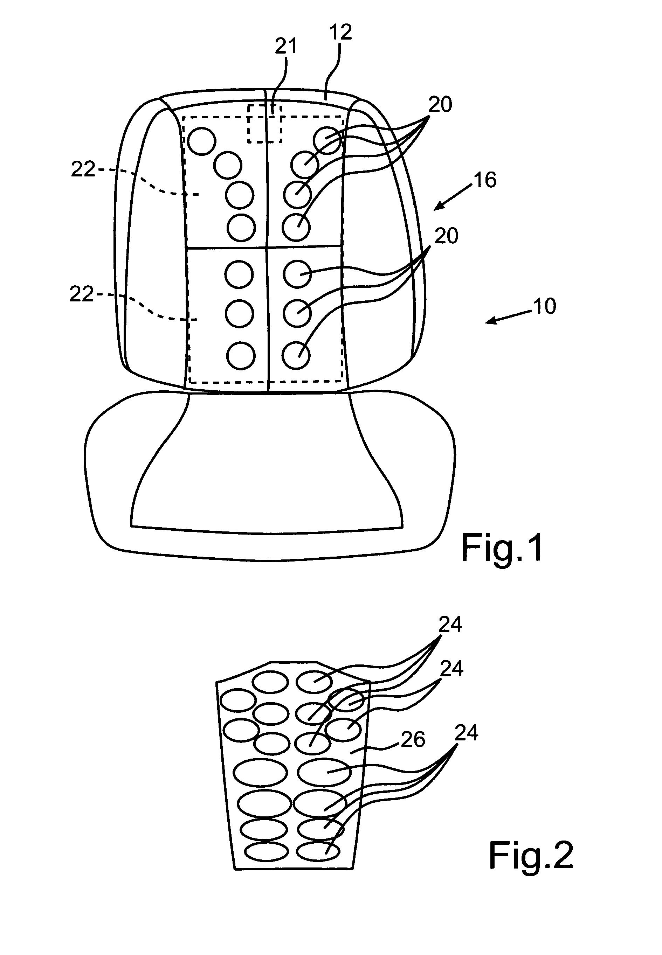

Fig. 1 zeigt eine Frontansicht eines Fahrzeugsitzes 10 mit einem Polster 12 einer Sitzlehne 14. Die Sitzlehne weist eine Massageeinrichtung und eine Sitzheizung auf. In Fig. 1 sind 14 Massagezonen 20 der Massageeinrichtung auf dem Polster 12 der Sitzlehne 16 und eine obere und eine untere Sitzheizungszone 22 der Sitzheizung schematisch angedeutet. Die Massagezonen 20 und die Sitzheizungszonen 22 befinden sich im Inneren des Polsters 12.

In Fig. 1 ist erkennbar, dass die Massagezonen 20 links und rechts einer vertikalen Symmetrieebene entlang der Sitzlehne 16 derart angeordnet sind, dass Massagen links und rechts der Wirbelsäule eines Insassen vom Lendenbereich bis zum Schulterbereich möglich sind. Mittels einer schematisch angedeuteten Steuerungseinrichtung 21 sind unterschiedlichen Abfolgen der Massagezonen 20 bzw. Massageprogrammen steuerbar.

Zusätzlich zu der Massageeinrichtung ist die Sitzheizung der Sitzlehne 16 mittels der Steuerungseinrichtung 21 steuerbar. Dabei können die obere und die untere Sitzheizungszone 22 unabhängig bzw. getrennt von einander eingeschaltet werden und so beispielsweise während einer Massage den oberen oder den unteren Rückenbereich des Insassen erwärmen.

Damit sich die Sitzkontur an die variablen Konturen der Massageeinrichtung anpassen kann, ist die Sitzheizung als eine Carbon- oder eine Litzenheizung ausgebildet, denn diese Heizungstypen sind besonders flexibel.

In Fig. 2 ist eine Frontansicht einer Massagematte 26 der Massageneinrichtung dargestellt, welche in dem Polster 12 der Sitzlehne 16 integriert sein kann. In dieser Massagematte 26 sind 18 druckbeaufschlagbare Elemente 24 als einzelne Zellen ausgebildet.

Dabei sind die einzelnen Elemente 24 bzw. Zellen oval oder kreisförmig jeweils mit seitlichen Begrenzungsrändern ausgebildet, so dass bei Beaufschlagung des Elementes 24 mit Druck im Wesentlichen nur eine Ausdehnung in Richtung senkrecht zur Oberfläche der Sitzkontur erfolgt. Durch Beaufschlagung von einzelnen Zellen bzw. Elementen 24 mit Druck werden somit punktuelle Veränderungen der Sitzkontur erreicht.

Eine Abfolge von beaufschlagten Elementen 24 hat durch die punktuelle Veränderung der Sitzkontur einen Massageneffekt auf einen Insassen des Fahrzeugs. So kann beispielsweise durch periodisches Wechsel oder kombiniertes Betätigen einzelner druckbeaufschlagbarer Elemente 24, eine vordefinierte Massagefunktion in einem Rückenbereich realisiert werden. Es kann zum Beispiel eine Massage im Rückenlendenbereich mit den unteren Elementen 24 oder eine Massage im Schulterbereich mit den oberen Elementen 24 erfolgen.

Die Elemente 24 sind pneumatisch oder elektropneumatisch mit Druckluft durch individuelle, in Fig. 2 nicht dargestellte Leitungen beaufschlagbar. Die Druckbeaufschlagung der einzelnen Elemente 24 bzw. der Abfolgen von Elementen 24 oder Massagenprogramme sind mittels der Steuerungseinrichtung 21 ansteuerbar. So können in der Steuerung bzw. durch die Steuerungseinrichtung 21 vier oder mehr voreingestellte oder individuell einstellbare Massageprogrammen vorgesehen bzw. erfasst werden, welche sich allein oder in Kombination mit einer oder zwei Sitzheizungszonen 22 einschalten lassen.

Die Anzahl von Elementen 24 und von Massagezonen 20 der Massageeinrichtung kann variieren. Je größer die Anzahl ist und je kleiner die Elemente 24 sind, desto gezielter können Massagefunktionen für bestimmte Körperzonen dargestellt werden. Die Sitzheizung an der Sitzlehne 16 kann ebenfalls in mehr als zwei Sitzheizungszonen 22 geteilt werden, die dann kleiner als in diesem Ausführungsbeispiel ausgebildet sein können und somit auch kleinere Körperzonen gezielt erwärmen.

Es ist klar, dass das vorliegend beschriebene Polster 12 entsprechend auch für das Sitzkissenteil des Fahrzeugsitzes 10 genutzt werden kann. Zudem könnte das Polster 12 auch bei einer anderen Sitzanlage ohne Einzelsitze, beispielsweise einer Fondsitzbank, zum Einsatz kommen.

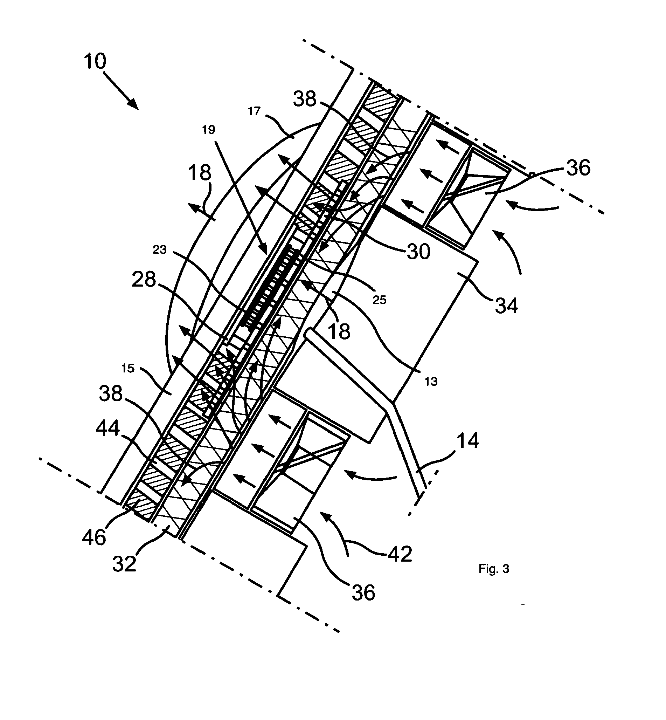

Der in Figur 3 ausschnittsweise gezeigter Fahrzeugsitz 10 weist als Massageelemente eine Mehrzahl von Hohlkörpern 13 auf, von denen in der Figur lediglich einer beispielhaft gezeigt ist. Der Hohlkörper 13 ist über eine Zuleitung 14 mit einem, insbesondere pneumatischen, Medium beaufschlagbar. Bei Befüllung des Hohlkörpers 13 mit dem Medium, beispielsweise mit Druckluft, wölbt sich der Hohlkörper 13 in Richtung auf einen Sitzbezug 15 des Fahrzeugsitzes 10 hin. Die entsprechende Verformungsrichtung des Hohlkörpers 13 ist in der Figur durch einen Bewegungspfeil 18 veranschaulicht.

Unter dem Druck des sich füllenden Hohlkörpers 13 wölbt sich der Fahrzeugsitz 10 in einem Bereich konvex aus, in welchem der Hohlkörper 13 angeordnet ist. Eine entsprechende Wölbung 17 des Fahrzeugsitzes 10 ist in der Figur schematisch dargestellt. Durch diese Wölbung 17 des Sitzbezugs 15 kann für den sich auf dem Fahrzeugsitz 10 befindenden Fahrzeuginsassen eine Massagewirkung bereitgestellt werden. Im Zusammenspiel mehrerer solcher Hohlkörper 13 ist eine Mehrzahl von Massageprogrammen realisierbar.

Zwischen dem, insbesondere eine Füllung aufweisenden, Sitzbezug 15 und dem Hohlkörper 13 ist ein Peltierelement 19 angeordnet. Der Druck des sich aufwölbenden Hohlkörpers 13 überträgt sich also auf das Peltierelement 19 und über dieses auf den Sitzbezug 16. Das Peltierelement 19 umfasst ein dem Sitzbezug 15 nahes Oberteil 24 und ein weiter von dem Sitzbezug 15 beabstandetes Unterteil 26. Durch Beaufschlagen des Peltierelements 19 mit elektrischem Strom kann nun je nach Polung der anliegenden Spannung wahlweise das Oberteil 23 oder das Unterteil 25 Wärme oder Kälte bereitstellen. Ist das Oberteil 23 kalt, so ist das Unterteil 25 warm und umgekehrt.

Dadurch kann der über den Hohlkörper 13 auf den Körper des Fahrzeuginsassen wirkende Druck lokal mit Kälte oder wahlweise mit Wärme kombiniert werden, welche jeweils von dem Oberteil 23 des Peltierelements 19 bereitgestellt wird.

Beim Befüllen des Hohlkörpers 13 wird also das dem Körper des Fahrzeuginsassen nahe Oberteil 23 in Richtung des sich mit dem Sitzbezug 15 in Anlage befindenden Körperteil des Fahrzeuginsassen bewegt. Hierbei kann es sich insbesondere um den Rücken des Fahrzeuginsassen handeln. Der Fahrzeuginsasse verspürt also einen angenehm wirkenden Massageeffekt, welcher zusätzlich durch die Kälte- oder durch die Wärmewirkung des Peltierelements 19 nach Art einer Heißsteinmassage oder Hot Stone Therapie bzw. nach Art einer Kaltsteinmassage oder Cold Stone Therapie unterstützt wird. Eine solche Heißstein- oder Kaltsteinmassage kann mit dem Ziel körperlicher und/oder seelischer Entspannung des Fahrzeuginsassen eingesetzt werden.

Das Peltierelement 19 ist zwischen einer sich mit dem Sitzbezug 15 in Anlage befindenden Abdeckplatte 28 und einem das Unterteil 25 unterlagernden Kühlkörper 30 angeordnet. Die Abdeckplatte 28 kann hierbei, wie vorliegend gezeigt, größer als das Oberteil 23 des Peltierelements 19 dimensioniert sein. Ist, wie ebenfalls vorliegend beispielhaft gezeigt, der Kühlkörper 30 nochmals größer dimensioniert als die Abdeckplatte 28, so ist eine besonders große Wärmeübertragungsfläche durch den Kühlkörper 30 bereitgestellt.

Der Kühlkörper 30 dient insbesondere einem Abführen von Wärme von dem Unterteil 25 des Peltierelements 22, wenn durch das Oberteil 23 Kälte für den Fahrzeuginsassen bereitgestellt wird.
Um dieses Abführen von Wärme über den Kühlkörper 30 weiter zu erleichtern, kann eine Luftführungsschicht 32 den Kühlkörper 30 unterlagern. Die Hohlräume aufweisende Luftführungsschicht 32 ermöglicht einen konvektiven Abtransport von Wärme von dem Kühlkörper 30.

Vorliegend kann ein zwangskonvektiver Abtransport der Wärme durch ein Betreiben von in einer Schaumauflage 34 des Fahrzeugsitzes angeordneten Lüftern 36 bewerkstelligt werden. Entsprechende Strömungspfeile 38 veranschaulichen in der Figur den zwangskonvektiven Transport der von dem Peltierelement 19 bereitgestellten Wärme.

Die Lüfter 36 können, wie in der Figur beispielhaft gezeigt, als Platz sparende Axiallüfter ausgebildet sein, welche in entsprechenden Ausnehmungen 40 der Schaumauflage 34 des Fahrzeugsitzes 10 angeordnet sind. Ansaugluft 42 kann über einen jeweiligen in der Schaumauflage 34 ausgebildeten Lufteinlass zu den Lüftern 36 gelangen. Die Ansaugluft 42 ist in der Figur durch entsprechende Strömungspfeile veranschaulicht.

Vorliegend sind das Peltierelement 19, die Abdeckplatte 28 und der Kühlkörper 30 im Bereich einer Luftdurchlässe 44 aufweisenden Komfortschicht 46 des Fahrzeugsitzes 10 untergebracht. An die Komfortschicht 46 grenzt oberseitig der Sitzbezug 15 unterseitig die Luftführungsschicht 32 an.

In einer alternativen Ausführungsform des Fahrzeugsitzes 10 kann das Peltierelement 19 die gewünschte Wärme oder Kälte in einem Bereich des Fahrzeugsitzes 10 bereitstellen, welcher nicht mittels des Hohlkörpers 13 mit Druck beaufschlagbar ist. In diesem Fall kann dann die Luftführungsschicht 32 und/oder eine wärmeleitfähige Materialschicht für den Transport der Wärme oder Kälte zu der Wölbung 17 sorgen. Insbesondere im Falle des Vorsehens der Luftführungsschicht 32 kann hierbei wenigstens ein Lüfter 36 unterstützend wirken.

Bevorzugt ist zumindest der als Massageelement wirkende und die Wölbung 17 bereitstellende Hohlkörper 13 in einem Bereich des Fahrzeugsitzes 10 angeordnet, welcher sich bei Benutzung des Fahrzeugsitzes 10 durch den Fahrzeuginsassen mit dessen Wirbelsäule in Anlage befindet. Das Positionieren des Hohlkörpers 13 und insbesondere des Peltierelements 19 in derartigen, etwa anhand physiotherapeutischer Erkenntnisse lokalisierten sensiblen Stellen des Körpers kann einen besonders hohen Entspannungseffekt mit sich bringen. Insbesondere kann hierbei die Hohlkörper 13 und die jeweiligen Peltierelemente 22 im Bereich von an der Wirbelsäule des Fahrzeuginsassen angeordneten Energiezentren positioniert sein.

Hierbei können insbesondere für Fahrzeuginsassen mit unterschiedlichen Körpergrößen jeweils unterschiedliche Massageelemente und Peltierelemente 22 körpergrößenspezifisch in dem Fahrzeugsitz 10 zum Einsatz kommen.

## Patentansprüche

1. Fahrzeugsitz (10) mit einem Polster (12) eines Sitzkissens und/oder einer Sitzlehne (16), mit einer Massageeinrichtung mit einer Mehrzahl von druckbeaufschlagbaren Elementen (24), welche zur Beeinflussung der Sitzkontur in das Polster (12) integriert und jeweils separat ansteuerbar sind, und mit einer Steuerungseinrichtung (21) zur Steuerung der Massageeinrichtung, wobei mittels der Steuerungseinrichtung (21) zusätzlich zu der Massageeinrichtung eine Sitzklimatisierung steuerbar ist,
**dadurch gekennzeichnet, dass**
die einzelnen druckbeaufschlagbaren Elemente (24) als Zellen einer Massagematte (26) ausgebildet sind, durch welche im Wesentlichen punktuelle Veränderungen der Sitzkontur erreichbar sind, und den Elementen (24) ein Funktionselement zugeordnet ist, das wahlweise als Heizeinrichtung oder Kühleinrichtung betreibbar ist, wobei das Funktionselement in einem mittels des zugeordneten Elements (24) mit Druck beaufschlagbaren Bereich des Fahrzeugsitzes (10) angeordnet ist, so dass das Bereitstellen von Wärme oder Kälte lokal mit dem durch das Element (24) bereitgestellten Druck derart koppelbar ist, dass wahlweise ein kalter oder ein warmer Druckpunkt bereitstellbar ist.

2. Fahrzeugsitz (10) nach Anspruch 1,
**dadurch gekennzeichnet, dass**
mittels der Steuerungseinrichtung (21) wenigstens zwei Sitzheizungszonen (22) einer Sitzheizung steuerbar sind.

3. Fahrzeugsitz (10) nach Anspruch 1 oder 2,
**dadurch gekennzeichnet, dass**
mittels der Steuerungseinrichtung (21) die einzelnen druckbeaufschlagbaren Elemente (24) in unterschiedlichen Abfolgen bzw. Massageprogrammen steuerbar sind.

4. Fahrzeugsitz (10) einem der vorhergehenden Ansprüche,
**dadurch gekennzeichnet, dass**
die Massagematte (26) mindestens 18 Elemente (24) bzw. Zellen für mindestens 14 Massagezonen (20) umfasst.

5. Fahrzeugsitz (10) nach einem der vorhergehenden Ansprüche,
**dadurch gekennzeichnet, dass**
in der Steuerung mindestens vier voreingestellte oder individuell einstellbare Massageprogrammen vorgesehen sind.

6. Fahrzeugsitz (10) nach einem der vorhergehenden Ansprüche,
**dadurch gekennzeichnet, dass**
die Elemente (24) pneumatisch oder elektropneumatisch mit Druck beaufschlagbar sind.

7. Fahrzeugsitz (10) nach Anspruch 2 oder einem der Ansprüche 3 bis 6 in Kombination mit Anspruch 2
**dadurch gekennzeichnet, dass**
die Sitzheizung als eine Carbon- oder eine Litzenheizung ausgebildet ist.

8. Fahrzeugsitz (10) nach einem der Ansprüche 2 bis 7,
**dadurch gekennzeichnet, dass**
die druckbeaufschlagbaren Elemente (24) zumindest teilweise in einem Bereich des Fahrzeugsitzes (10) angeordnet sind, der sich bei Benutzung des Fahrzeugsitzes (10) durch den Fahrzeuginsassen in Überdeckung mit dessen Wirbelsäule befindet.

9. Fahrzeugsitz (10) nach Anspruch 2 und 8,
**dadurch gekennzeichnet, dass**
die Sitzheizung zumindest teilweise in einem Bereich des Fahrzeugsitzes (10) angeordnet ist
der sich bei Benutzung des Fahrzeugsitzes (10) durch den Fahrzeuginsassen in Überdeckung mit dessen Wirbelsäule befindet.

10. Fahrzeugsitz (10) nach einem der vorhergehenden Ansprüche,
**dadurch gekennzeichnet, dass**
die druckbeaufschlagbaren Elemente (24) als Massageelemente zum Massieren eines Fahrzeuginsassen ausgebildet sind.

11. Fahrzeugsitz (10) nach einem der vorhergehenden Ansprüche,
**dadurch gekennzeichnet, dass**
das Funktionselement als Peltierelement ausgebildet ist.

12. Fahrzeugsitz (10) nach Anspruch 10 oder 11,
**dadurch gekennzeichnet, dass**
wenigstens ein erstes Massageelement dazu ausgelegt ist, bei einer Standardsitzposition eines Fahrzeuginsassen (36, 42, 44), in welcher das Becken des Fahrzeuginsassen (36, 42, 44) sich mit dem unteren Teilbereich des Lehnenspiegels (20) in Anlage befindet, zumindest ein Sitzbein (32) des Sitzinsassen (36, 42, 44) mit Druck zu beaufschlagen.

13. Fahrzeugsitz (10) nach einem der Ansprüche 10 bis 12,
**dadurch gekennzeichnet, dass**
wenigstens ein zweites Massageelement (28) dazu ausgelegt ist, bei einer Standardsitzposition eines Sitzinsassen (36, 42, 44), in welcher das Becken des Sitzinsassen (36, 42, 44) sich mit dem unteren Teilbereich des Lehnenspiegels (20) in Anlage befindet, zumindest ein Darmbein (34) des Sitzinsassen (36, 42, 44) mit Druck zu beaufschlagen.

## Claims

1. Vehicle seat (10) with a pad (12) of a cushion and / or a backrest (16), with a massaging device having a plurality of elements (24) to which pressure can be applied, which are integrated into the pad (12) to influence the seat contour and can each be separately controlled, and with a control unit (21) to control the massage device, wherein seat temperature control is possible by means of the control unit (21) in addition to the massage device,
**characterised in that**
the individual elements (24) to which pressure can be applied are formed as cells of a massage mat (26), through which substantially point by point changes of the seat contour can be carried out, and a function element is assigned to the elements (24) which can be operated as selected as a heating device or a cooling device, wherein the function element is arranged in an area of the vehicle seat (10) to which pressure can be applied by means of the assigned element (24), so that the provision of heat or cold can be coupled locally with the pressure provided by the element (24) so that, as selected, a cold or a warm pressure point can be provided.

2. Vehicle seat (10) according to claim 1,
**characterised in that**
at least two seat heating zones (22) of a seat heater can be controlled by means of the control unit (21).

3. Vehicle seat (10) according to claim 1 or 2,
**characterised in that**
the individual elements (24) to which pressure can be applied can be controlled by means of the control unit (21) in different sequences or massage programmes.

4. Vehicle seat (10) according to one of the preceding claims,
**characterised in that**
the massage mat (26) has at least 18 elements (24) or cells for at least 14 massage zones (20).

5. Vehicle seat (10) according to one of the preceding claims,
**characterised in that**
at least four pre-set or individually adjustable massage programmes are provided in the controller.

6. Vehicle seat (10) according to one of the preceding claims,
**characterised in that**
pressure can be applied to the elements (24) pneumatically or electro-pneumatically.

7. Vehicle seat (10) according to claim 2 or one of claims 3 to 6 in combination with claim 2,
**characterised in that**
the seat heating is formed as carbon or braid heating.

8. Vehicle seat (10) according to one of claims 2 to 7,
**characterised in that**
the elements (24) to which pressure can be applied are arranged at least partially in an area of the vehicle seat (10) which is located, when the vehicle seat (10) is in use by the vehicle occupant, to cover his spinal column.

9. Vehicle seat (10) according to claim 2 and claim 8,
**characterised in that**
at least a part of the seat heating is arranged in an area of the vehicle seat (10) which is located, when the vehicle seat (10) is in use by the vehicle occupant, to cover his spinal column.

10. Vehicle seat (10) according to one of the preceding claims,
**characterised in that**
the elements (24) to which pressure can be applied are formed as massage elements to massage a vehicle occupant.

11. Vehicle seat (10) according to one of the preceding claims,
**characterised in that**
the function element is formed as a Peltier element.

12. Vehicle seat (10) according to claim 10 or 11,
**characterised in that**
at least a first massage element is designed, in a standard sitting position of a vehicle occupant (36, 42, 44), in which the pelvis of the vehicle occupant (36, 42, 44) is in abutment with the lower sub-region of the backrest surface (20), to apply pressure to at least an ischium (32) of the seat occupant (36, 42, 44).

13. Vehicle seat (10) according to one of the claims 10 to 12,
**characterised in that**
at least a second massage element (28) is designed, in a standard sitting position of a seat occupant (36, 42, 44), in which the pelvis of the seat occupant (36, 42, 44) is in abutment with the lower sub-region of the backrest surface (20), to apply pressure to at least an ilium (34) of the seat occupant (36, 42, 44).

## Revendications

1. Siège de véhicule (10) avec un rembourrage (12) d'un coussin d'assise et/ou d'un dossier (16), doté d'un équipement de massage comprenant une pluralité d'éléments (24) qui peuvent être mis sous pression, qui sont intégrés dans le rembourrage (12) afin de modifier le contour de siège dans le rembourrage (12) et qui peuvent être commandés individuellement, et doté d'un dispositif de commande (21) destiné à commander l'équipement de massage, le dispositif de commande (21) permettant de commander une climatisation du siège en plus de l'équipement de massage, **caractérisé en ce que** les éléments (24) qui peuvent être mis sous pression sont conçus en tant que cellules d'un matelas de massage (26) qui permettent essentiellement d'obtenir des modifications ponctuelles du contour de siège, et les éléments (24) sont associés à un élément de fonctionnement, qui peut fonctionner soit en tant que dispositif de chauffage ou soit en tant que dispositif de refroidissement, l'élément de fonctionnement étant disposé dans une zone du siège de véhicule (10) pouvant être mises sous pression au moyen de l'élément (24) associé de manière que la fourniture de chaleur ou de froid peut être couplée localement à la pression préparée par l'élément de sorte qu'un point de pression chaud ou froid puisse être préparé.

2. Siège de véhicule (10) selon la revendication 1, **caractérisé en ce que** le dispositif de commande (21) puisse commander au moins deux zones de chauffage de siège (22) d'un chauffage de siège.

3. Siège de véhicule (10) selon la revendication 1 ou la revendication 2, **caractérisé en ce que** le dispositif de commande (21) puisse commander chacun des éléments (2') pouvant être mis sou pression dans différentes séquences ou des programmes de massage.

4. Siège de véhicule (10) selon l'une quelconque des revendications précédentes, **caractérisé en ce que** le matelas de massage (26) comprend au moins 18 éléments (24) ou cellules pour au moins 14 zones de massage (20).

5. Siège de véhicule (10) selon l'une quelconque des revendications précédentes, **caractérisé en ce que** la commande comprend au moins quatre programmes de massage préréglés ou pouvant être réglés individuellement.

6. Siège de véhicule (10) selon l'une quelconque des revendications précédentes, **caractérisé en ce que** les éléments (24) peuvent être mis sou pression pneumatiquement ou électropneumatiquement.

7. Siège de véhicule (10) selon la revendication 2 ou l'une quelconque des revendications 3 à 6 en combinaison avec la revendication 2, **caractérisé en ce que** le chauffage de siège est conçu en tant que chauffage à fil de litz ou au carbone.

8. Siège de véhicule (10) selon l'une quelconque des revendications 2 à 7, **caractérisé en ce que** les éléments (24) pouvant être sous pression sont disposés au moins en partie dans une zone du siège de véhicule (10) qui se situe lors de l'utilisation du siège de véhicule (10) par les occupants du véhicule dans l'enveloppe de leur colonne vertébrale.

9. Siège de véhicule (10) selon les revendications 2 et 8, **caractérisé en ce que** le chauffage de siège est disposé au moins en partie dans une zone du siège de véhicule (10) qui se situe lors de l'utilisation du siège de véhicule (10) par les occupants du véhicule dans l'enveloppe de leur colonne vertébrale.

10. Siège de véhicule (10) selon l'une quelconque des revendications précédentes, **caractérisé en ce que** les éléments (24) pouvant être mis sous pression sont conçus en tant qu'éléments de massage destiné à masser un occupant de véhicule.

11. Siège de véhicule (10) selon l'une quelconque des revendications précédentes, **caractérisé en ce que** l'élément de fonctionnement est conçu en tant qu'élément Peltier.

12. Siège de véhicule (10) selon la revendication 10 ou 11, **caractérisé en ce qu'**au moins un premier élément de message est conçu, lorsque un occupant de véhicule (36, 42, 44) est en position assise standard, de manière que le bassin de l'occupant (36, 42, 44) soit en butée avec la zone partielle inférieure du panneau arrière (20) pour qu'au moins un ischion (32) de l'occupant de siège (36, 42, 44) puisse être mis sous pression.

13. Siège de véhicule (10) selon la revendication 10 à 12, **caractérisé en ce qu'**au moins un second élément de message est conçu, lorsqu'un occupant de véhicule (36, 42, 44) se trouve en position assise standard, de manière que le bassin de l'occupant (36, 42, 44) soit en butée avec la zone partielle inférieure du panneau arrière (20) pour qu'au moins un ilion (34) de l'occupant de siège (36, 42, 44) puisse être mis sous pression.
